# EUROPÄISCHE PATENTSCHRIFT

(11) **EP 0 432 720 B1**
(45) Veröffentlichungstag und Bekanntmachung des Hinweises auf die Patenterteilung: **08.02.1995**
(21) Anmeldenummer: 90123797.4
(22) Anmeldetag: 11.12.1990
(51) Int. Cl.: H02K 3/50

(54) **Statorwickelkopf, Revisionssatz hierfür und Verfahren zu dessen Umrüstung**
Stator winding head, exchange set therefor and method for its replacement
Tête de bobinage de stator, ensemble de rechange pour celle-ci et méthode pour son remplacement

(30) Priorität: 15.12.1989 CH 4515/89
(43) Veröffentlichungstag der Anmeldung: 19.06.1991
(73) Patentinhaber: Weigelt, Klaus, Dr. Ing., D-79788 Küssaberg (DE)
(72) Erfinder: Weigelt, Klaus, Dr. Ing., D-79788 Küssaberg (DE)
(74) Vertreter: Troesch Scheidegger Werner AG

(56) Entgegenhaltungen:
- CH-A- 634 695
- DE-A- 2 600 928
- DE-B- 2 703 365
- US-A- 3 293 472
- US-A- 4 488 079
- US-A- 4 525 642

## Beschreibung

Die vorliegende Erfindung betrifft einen Statorwikkelkopf einer elektrischen Maschine nach dem Oberbegriff von Anspruch 1 sowie ein Verfahren zur Umrüstung eines Statorwikkelkopfes nach dem Oberbegriff von Anspruch 16.

Bei Statorwickelköpfen, insbesondere grosser elektrischer Maschinen, insbesondere beispielsweise bei Turbogeneratoren mit direkt H₂-gekühlter Statorwicklung, sind einerseits die im Betrieb an Resonanzstellen des mechanischen Statorwickelkopfsystems auftretenden grossen dynamischen Kräfte und die daraus resultierenden Probleme bekannt. Das Auftreten von anregenden Kräften bestimmter Frequenzen kann bei vorgegebenem Betrieb nicht beeinflusst werden, womit das Bestreben darin liegt, die Resonanzstellen der mechanischen Statorimpedanz möglichst von den betrieblich auftretenden Anregungsfrequenzen wegzuschieben. Im Betrieb führen Betriebsvibrationen insbesondere in Resonanz zu hohen dynamischen Wickelkopfbeanspruchungen, insbesondere bei Turbogeneratoren, was zu einer Lockerung des gesamten Statorwicklungsverbandes führen kann. Isolationsabrieb und Schäden am Stator und die Folgen davon, führen ihrerseits zu langen Stillstandszeiten, um die Statoren zu überholen. Bedingt durch die bekannte, direkte Wasserstoffkühlung der Statorwicklung bei Generatoren höchster Leistung wurde die Anzahl der Statornuten möglichst minimal gehalten, womit sich für die Statorstäbe grosse Abmessungen ergeben und damit grosse Massen. Da die dynamischen Kräfte proportional zu den beaufschlagten Massen sind, nebst zur Schwingbeschleunigung, ergeben sich entsprechend hohe Beanspruchungen, insbesondere des Wickelkopfverbandes. Bei bekannten Statorwickelköpfen besteht somit einerseits das Problem, die hohen dynamischen Kräfte aufnehmen zu können. Anderseits müssen derartige Statorwickelköpfe, auch wenn sie bezüglich dynamischer Beanspruchungen verbessert aufgebaut sind, von Zeit zu Zeit gewartet werden, wobei die üblicherweise komplizierten und wartungsunfreundlichen Statorwickelkopfkonstruktionen zu entsprechenden Stillstandszeiten führen: Ein Ueberholen der meisten bekannten Statorwickelköpfe bedeutet eine Neuwicklung des Stators.

Aus der US-A- 4 488 079 ist ein Statorwickelkopf, insbesondere eines Turbogenerators, mit einer koaxial zur Maschinenachse endständig sich nach aussen hohlkegelförmig aufweitenden Wicklungsstabanordnung bekannt sowie eine Abstützung hierfür. Die Abstützung umfasst mehrere, in dem durch die Stabanordnung gebildeten Hohlkegel innenliegende Ringe sowie, aussenliegend, einen massiven, konisch verlaufenden Aussenring. Dazwischen sind die Wicklungsstäbe mittels Zugankern und Zwischenringen verspannt. Der äussere massive Ring ist weiter axial am Statorkörper verankert. Aufgrund der üblichen kegelförmigen Wicklungsstabanordnung, die sich axial nach aussen erweitert, ist es nicht möglich, das Statorwickelkopfabstützsystem zu revidieren, ohne die Stäbe auszubauen, was Neuwicklung bedeutet. Zudem ergeben mehrere schwach dimensionierte Innenringe eine nur geringe Statorwickelkopfsteifheit, da die Verpressungskräfte mehr oder weniger nur linienförmig und kaum gleich am Statorstabkegel zur Wirkung kommen.

Gemäss der US-A- 4 525 642 ist für einen Statorwickelköpf mit wiederum sich kegelförmig aufweitender Wicklungsstabanordnung eine Verankerung zwischen Statorkörper und Aussenhalterung der Stäbe am Statorwickelkopf bekannt geworden, um thermisch bedingte Ausdehnungen zwischen Wicklungsstabanordnung und Statorkörper aufzunehmen.

Aus der US-A- 4 563 607 ist ein Statorwickelkopf bekannt mit wiederum einer koaxial zur Maschinenachse endständig sich nach aussen hohlkegelförmig aufweitender Wicklungsstabanordnung sowie einer Abstützung hierfür, welch letztere, innenliegend, die Stäbe untergreifende Klammern umfasst, radial verspannt mit obenliegenden, am Statorkörper verankerten, im wesentlichen axial ausgerichteten Platten. Die Platten und die Klammern, zusammen mit zwischen den Wicklungsstäben liegenden Spannringen, verspannen die Wicklungsstabanordnung. Die Abstützung ist am Statorkörper befestigt. Die geringen Massen der hier für die Abstützung verwendeten verspannten innen- und aussenliegenden Organe wirken sich auf die Dämpfung des Resonanzverhaltens des Statorwickelkopfes nachteilig aus, die linienförmige Verspannung ebenso, und es wird eine nur ungenügende Steifheit des Statorwickelköpfes erzielt.

Aus der US-A- 4 808 873 ist es grundsätzlich bekannt, zwischen die Stäbe der Wicklungsstabanordnung geeignetes Polstermaterial einzufügen.

Aus der US-A- 3 293 472 ist eine Aussenabstützung für Rotorwickelköpfe bekannt, welche aus einzelnen, miteinander verschraubten Segmenten besteht.

Aus der EP-A- 0 309 096 ist es im weiteren bekannt, an einem Statorwickelkopf wiederum mit sich hohlkegelförmig aufweitender Wicklungsstabanordnung eine Aussenhalterung in Form eines Aussenringes vorzusehen, um, mit Spannbändern davon ausgehend, die Wicklungsstäbe zu umfassen. Wiederum bedingt durch die geringen eingebauten Abstützmassen und linienförmigen Verspannungen ist das Resonanzverhalten dieses Statorwickelkopfes aufgrund fehlender Steifheit unbefriedigend. Zudem ergibt sich wegen des axial vom grössten Aussendurchmesser des Wicklungsstabanordnungskegels nach innen versetzten Ringes, dass eine Revision des Statorwickelkopfes nicht möglich ist, sondern nur eine Zerlegung mit mindestens teilweiser Entfernung der Wicklungsstäbe.

Nun ist aus der CH-PS 634 695 ein Statorwickelkopf einer elektrischen Maschine mit einer koaxial zur Maschinenachse endständig sich hohlkegelförmig aufweitenden Wicklungsstabanordnung bekannt, wobei eine Abstützung vorgesehen ist, welche einen Innenring umfasst, der sich konusförmig entlang eines wesentlichen axialen Abschnittes der kegelförmigen Stabanordnung erstreckt, sowie mit einer Aussenringanordnung am Ende der Stabanordnung, die mittels Zugankern über die Stabanordnung mit dem Innenring radial verspannt ist. Um den Statorwickelkopf trotz des vorgesehenen Aussenringes leichter warten zu können, d.h. Innen- und Aussenring entfernen zu können, ohne die Wicklungsstabanordnung selbst zerlegen zu müssen, ist der Aussenring unmittelbar im Bereich einer Innen- und Aussenstäbe verbindenden Bügelpartie angeordnet, welch letztere, kegelendständig, im wesentlichen eine zylindrische Fläche definiert, derart, dass nach Lösen der Zuganker der endständig vorgesehene Aussenring abgezogen werden kann. Allerdings sind sowohl Aussenring wie auch Innenring noch zusätzlich axial gesichert, so dass eine Zerlegung relativ aufwendig bleibt. Zugunsten einer immerhin leichteren Zerlegbarkeit ist aber, wie erwähnt, der relativ schwach dimensionierte Aussenring so am endständigen, zylindrischen Teil der Wicklungsstabanordnung angeordnet, dass die radiale Verspannung mit dem Innenring nur stabendständig erfolgt, der axial weitaus längere, kegelförmige Abschnitt der Wicklungsstabanordnung ist bis hin zum Statorkörper bzw. Kern nicht weiter verspannt. Daraus resultiert eine nur geringe Steifheit des Statorwickelkopfes trotz des massiven Innenringes.

Aus der DE-B- 27 03 365 ist eine Anordnung zur Befestigung von Statorwickelköpfen bekannt, bei welcher ein inneres, konisches Ringelement mittels einer Zugstange axial gegen die konische Fläche der Wickelstabanordnung verspannt ist. Ebenfalls ist ein äusseres Ringelement vorhanden, welches mit dem inneren Ring verbunden ist. Diese beiden Ringe sind über ein Hebelelement mit dem Statorteil verbunden. Dieses bewirkt nun aber, dass bei einer axialen Verschiebung der Statorwickelköpfe gegenüber dem Statorteil nach aussen die Verspannung zwischen dem inneren und äusseren Ring nachlässt und damit die Versteifung der Statorwickelköpfe verringert wird.

Die vorliegende Erfindung setzt sich zur Aufgabe, einen Statorwickelkopf obgenannter Art schwingungsunanfälliger, d.h. steifer auszubilden.

Dies wird durch Ausbildung nach dem kennzeichnenden Teil von Anspruch 1 erreicht.

Dadurch, dass nach Anspruch 1 eine Aussenabstützung eine Aussenringanordnung im Bereich der kegelförmig nach innen konvergierenden Stabanordnungsaussenfläche umfasst, wird eine Verspannung der Wicklungsstabanordnung entlang der durch sie gebildeten Kegelfläche grossflächig möglich, wodurch die Steifheit der Statorwickelkopfanordnung wesentlich erhöht wird. Damit werden Resonanzfrequenzen dieser Anordnung über die im Betrieb der elektrischen Maschine auftretenden Anregungsfrequenzen, bei Grundfrequenzen von 50 oder 60 Hz, üblicherweise vornehmlich bei deren ersten Harmonischen, nämlich 100 bzw. 120 Hz, angehoben. Dadurch, dass sie weiter azimutal und/oder radial spannbar ist, kann die Aussenringanordnung als Ganzes trotzdem über den endständigen Stabanordnungsbereich mit grösstem Kegeldurchmesser ohne Zerlegung des Statorwikkelkopfes auf die Wicklungsstabanordnung aufgeschoben oder zerlegt werden und darnach, im Bereich reduzierten Kegeldurchmessers, festgespannt werden, durch radialen Zug und/oder azimutales Spannen.

Eine einfache Zerlegbarkeit und Einbaubarkeit, ohne Wicklungsstäbe entfernen zu müssen, wird bei Vorgehen nach Anspruch 2 erreicht.

Bevorzugterweise wird der Statorwickelkopf weiter nach dem Wortlaut von Anspruch 5 ausgebildet.

Dadurch, dass nämlich der Innenring an die Statorstabanordnung mittels zu seiner Konusfläche schiefwinklig axial nach innen geneigter Zuganker keilartig auf die Stabanordnung zur Wirkung kommt, wird erreicht, dass aufgrund des durch die Zuganker ausgeübten auch axialen Zuges der Innenring axial in den Statorkörper hinein gespannt wird. Seine Keilwirkung kann dabei durch Erhöhung bzw. Erniedrigung der Zugankerspannung verstellt werden und damit die Steifheit des Statorwickelkopfes.

Das Keilprinzip an der sich hierfür anbietenden kegeligen Wicklungsstabanordnung wird bevorzugterweise und nach dem Wortlaut von Anspruch 6 konsequent auch für eine Aussenringanordnung eingesetzt, indem letztere über eine konische Spannflächenanordnung auf die Aussenseite der kegelförmigen Stabanordnung wirkt und mittels zu dieser Fläche axial nach aussen geneigter Zuganker keilartig auf die Stabanordnung zur Wirkung kommt.

Die Kombination beider Keilanordnungen, nämlich des durch den Innenring gebildeten Innenkeils und des durch die Aussenringanordnung gebildeten Aussenkeils, gegensinnig mittels der Zuganker verspannt, ergibt eine optimal steife Wickelkopfkonstruktion.

In einer weiteren bevorzugten Ausführungsvariante wird gemäss Wortlaut von Anspruch 7 der Innenring im wesentlichen ausschliesslich mittels Zugankern gehaltert, abgesehen von einer axialen Sicherung bezüglich der Wicklung, wie sie z.B. mittels einer Kordel erreicht wird. Beachtet man nämlich, dass entweder eine Aussenabstützung oder die Innenringanordnung axial am Statorkörper zu verankern sind, so ist ersichtlich, dass aufgrund der Zugänglichkeit dies bevorzugterweise an der Aussenabstützung realisiert wird und mithin der Innenring, wie in Anspruch 7 spezifiziert, befestigt wird.

Dabei wird aber weiter gemäss Wortlaut von Anspruch 8 vorgeschlagen, dass eine Aussenabstützung mindestens einen, im wesentlichen ausschliesslich mittels Zugankern gehalterten Aussenring umfasst, der spannbar ist, womit erreicht wird, dass das Spannen der Aussenringanordnung, unabhängig von der axialen Verankerung der Aussenringanordnung am Statorkörper, vorgenommen werden kann.

Im weiteren umfasst die Aussenabstützung gemäss Wortlaut von Anspruch 9 vorzugsweise mindestens einen Aussenring mit zwei, vorzugsweise drei und mehr azimutal und/oder radial verspannbaren, voneinander lösbaren Ringsegmenten, womit erreicht wird, dass der Aussenring in Form voneinander getrennter Segmente über den Aussenkegel der Statorstabanordnung aufgelegt werden kann und darnach die Segmente untereinander verbunden und um den Statorstabkegel schliessend azimutal festgespannt werden können. Alternativ können die Segmente auch nur radial einwärts gespannt werden. Das Spannen der Segmente erfolgt bevorzugterweise durch azimutales Verschrauben untereinander oder durch radiale Anker.

Durch Vorsehen einer hohlkegelförmigen Auflage, im wesentlichen von der Axialausdehnung der kegelförmigen Stabanordnung entsprechender Axialausdehnung, über die sich die Aussenabstützung, wie die Aussenringanordnung an der Aussenfläche der kegelförmigen Stabanordnung abstützt, wird nach Anspruch 10 erreicht, dass ein gleichmässiges Verspannen der Stabanordnung über grosse Bereiche der Kegelfläche erzeugt werden kann: Die Abstützanordnung verteilt die z.B. mittels der Zuganker erzielten Kräfte gleichförmig über die genannte Kegelfläche. Dabei werden bevorzugterweise zwischen die Abstützanordnung und die ihr benachbart liegenden Wicklungsstäbe ein oder mehrere Ringe eingelegt, bevorzugterweise gepolstert.

Gemäss Wortlaut von Anspruch 11 werden weiter an der erfindungsgemässen Ausführung des Statorwickelkopfes die Stäbe, der Innenring, eine Aussenabstützung mindestens teilweise gegenseitig vergossen und/oder gepolstert und/oder verkordelt und miteinander verspannt.

Aufgrund der erwähnten, leichten Zerlegbarkeit des erfindungsgemässen Statorwickelkopfes ist sein Konstruktionsprinzip ausserordentlich geeignet, um bei Ueberholungsarbeiten an bekannten bestehenden Statorwickelköpfen mit einer koaxial zur Maschinenachse endständig sich nach aussen hohlkegelförmig aufweitenden Wicklungsstabanordnung eingesetzt zu werden.

Zu diesem Zweck wird erfindungsgemäss die Verwendung nach dem Wortlaut von Anspruch 15 für derartige Statorwickelköpfe vorgeschlagen.

Mit Bereitstellung des Innenringes sowie der Aussenabstützung und mit Hilfe weiterer bekannter Konstruktionselemente, wie von Zugankern, Zwischenspannringen, Ausgiess- bzw. Polster- bzw. Verkordelungsmaterial etc. wird es damit möglich, Statorwikkelköpfe rasch und ohne lange Stillstandszeit zu überholen.

Erfindungsgemäss wird weiter gemäss Wortlaut von Anspruch 16 zur Umrüstung, wie Revision etc. eines bekannten oder erfindungsgemässen Statorwickelkopfes vorgegangen. Dabei wird eine azimutal und/oder radial spannbare Aussenabstützung über die Aussenfläche der Stabanordnung gelegt und über Zuganker mit dem Innenring verspannt und selbst azimutal und/oder radial gespannt.

Weitere bevorzugte Ausführungsvarianten dieses Umrüstungsverfahrens sind in den Ansprüchen 17 bis 23 spezifiziert.

Die Erfindung wird anschliessend beispielsweise anhand von Figuren erläutert.

Es zeigen:
- Fig. 1: einen Radialschnitt durch einen erfindungsgemässen Statorwickelkopf,
- Fig. 2a: schematisch die Aufsicht auf einen Aussenring zur Erläuterung der azimutalen Spannbarkeit an der Aussenringanordnung gemäss Fig. 1,
- Fig. 2b: eine Darstellung analog zu Fig. 2a für radial spannbare Aussenabstützungssegmente,
- Fig. 3: eine Ausführungsvariante eines Verbindungswinkels zwischen Statorkörper und Aussenringanordnung gemäss Fig. 1,
- Fig. 4: eine Teilansicht eines Wickelkopfes gemäss vorliegender Erfindung in einer weiteren Ausführungsvariante,
- Fig. 5: eine Teilansicht einer Wickelkopfabwicklung bei einer weiteren erfindungsgemässen Ausführungsform des Wickelkopfes, bevorzugterweise kombiniert mit derjenigen nach Fig. 4 oder nach Fig. 1.

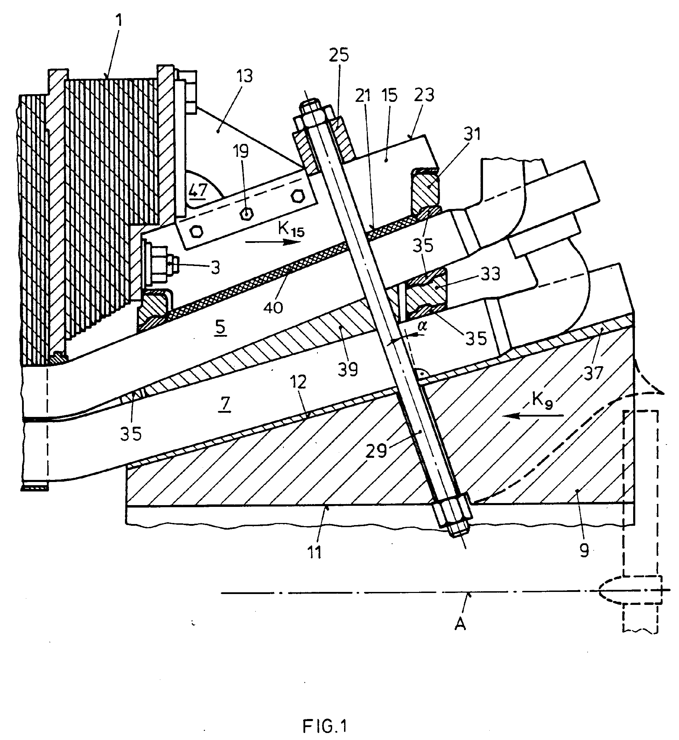

Der in Fig. 1 dargestellte Statorteil, beispielsweise eines Turbogenerators, umfasst in bekannter Art und Weise einen Statorkern 1 mit zur schematisch eingetragenen Maschinenachse A koaxialen Schrauben 3 verschraubt. Im Statorkern 1 bzw. Statorkörper liegen äussere Wicklungsstäbe 5 bzw. innere Wicklungsstäbe 7.

Diese ragen stirnseits aus dem Statorkörper 1 vor, sind, in radialen Ebenen durch die Maschinenachse A, im Austrittsbereich auswärts geknickt, so dass sie, in ihrer Gesamtheit, um die Maschinenachse A, eine hohlkegelförmige Wicklungsstabanordnung bilden. Gemäss der vorliegenden Erfindung ist nun ein Innenring 9 vorgesehen, welcher eine zylindrische Innenfläche 11 und eine konische Aussenfläche 12 aufweist. Bezüglich der Maschinenachse A weist die äussere Konusfläche 12 mindestens nahezu denselben Konuswinkel auf, wie durch die inneren Wicklungsstäbe 7 bezüglich dieser Achse A definiert, gegebenenfalls einen grösseren. Die Konusfläche 12 des Innenringes 9 weist bevorzugterweise keine radialen Ein- oder Ausformungen auf, ausser gegebenenfalls eine Rillung oder dergleichen zur Halterung von Füllmaterial, womit der Innenring 9 keilartig gleitend in den durch die inneren Wicklungsstäbe 7 aufgespannten Kegel einführbar und axial verspannbar ist. Der Innenring 9 wird bevorzugterweise aus einem elektrisch nicht leitenden oder zumindest schlecht leitenden Material, wie aus glasfaserverstärktem Kunststoff, gefertigt. Der Innenring kann weiter aus einem Stück oder zusammengesetzt aufgebaut sein.

Wie gestrichelt dargestellt, kann gegebenenfalls auf der Rotorwelle in der Nähe des Wickelkopfes ein Ventilator angeordnet sein; dann kann der Innenring 9, endständig, auch als Gasleitanordnung für die Kühlgasströmung ausgelegt werden, so als Aussengehäuse des Ventilators.

Ausserhalb der durch die Wicklungsstäbe aufgespannten Kegelanordnung sind, wie in Fig. 1 dargestellt, beispielsweise über Winkelelemente 13, Konsolenplatten 15 mittels Schrauben am Statorkörper 1 verankert. Die Konsolenplatten 15 selbst sind mittels Schrauben 19 mit den Winkelelementen 13 verschraubt. Die Konsolenplatten 15 überdecken ein oder mehrere Wicklungsstäbe 5, 7, in axialer und azimutaler Richtung betrachtet, und definieren mit Bezug auf die Aussenstäbe 5 mit ihren Innenflächen 21 eine Konusfläche, die im wesentlichen parallel zu der durch die Aussenstäbe 5 gebildeten Kegelfläche liegt. Allenfalls ist der Konusöffnungswinkel der Flächen 21 kleiner als derjenige des durch die Aussenstäbe 5 aufgespannten Kegels. Auf den radial äusseren Abstützflächen 23 der Konsolenplatten 15 reitet ein im montierten Zustand durchgehend umlaufender Aussenring 25.

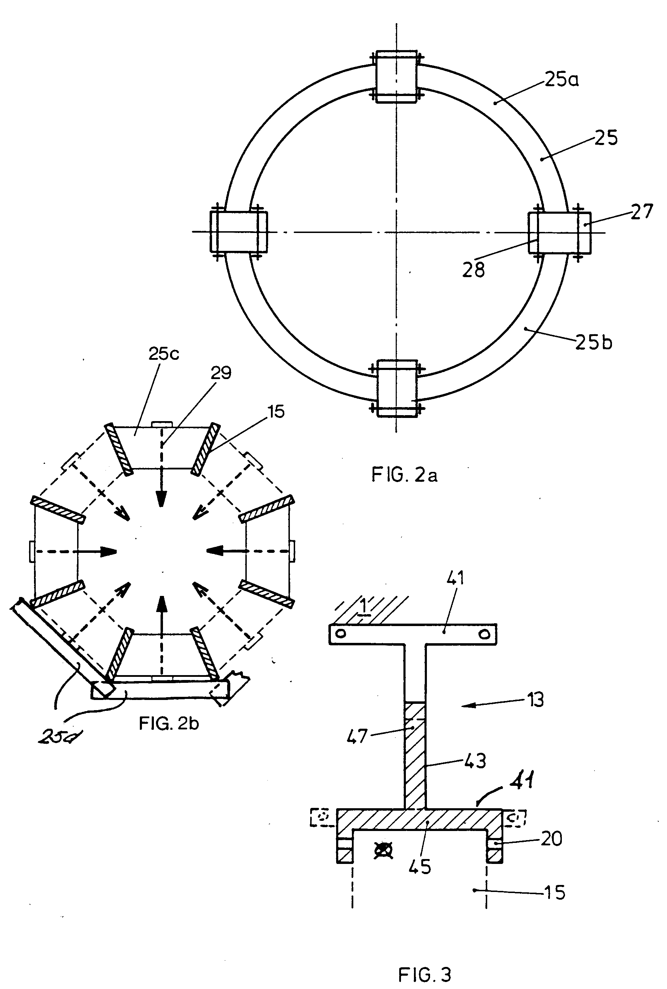

Der Aussenring 25 ist, wie schematisch in Fig. 2a dargestellt, azimutal spannbar, und in einer einfachen Ausführungsvariante gemäss besagter Fig. 2a besteht er aus mindestens zwei, vorzugsweise drei oder mehr Kreisringsegmenten 25a, 25b etc., welche, über Verbinder 27 mit schematisch in Fig. 2a eingetragenen, azimutal wirkenden Spannschrauben 28, über den Teil der Aussenringanordnung bildenden Konsolenplatten 15 verbunden und azimutal verspannt werden.

In gewissen Fällen kann anstelle eines azimutal spannbaren Aussenringes 25 die Aussenabstützung aus mehreren, z.B. an oder auf den Konsolenplatten 15 sich beidseits abstützenden Spannbalken ausgebildet sein, die je radial mit den Zugankern 29 festgespannt werden, oder es kann ein Ring derartiger Einzelsegmente 25c mit Zugankern 29 radial festgespannt, gemäss Fig. 2b, vorgesehen werden. Dabei brauchen die Segmente 25c - wie gestrichelt dargestellt - nicht einen umlaufenden Ring zu bilden. Die Spannbalken können sich auch, wie erwähnt und bei 25d dargestellt, z.B. axial gestaffelt auf den Platten 15 abstützen.

An dieser Stelle soll betont werden, dass der Wickelkopf erfindungsgemäss und je nach Maschinenerfordernis wie folgt aufgebaut sein kann:
- Innenring mit Zuganker und azimutal spannbarem Aussenring.
- Innenring mit Aussenring aus Querbalken, die nicht azimutal spannbar sind. Querbalken und Innenring werden mit Zuganker verspannt.
- In jeder Variante ist der Innenring gegenüber der Wicklung gesichert.
- Der Innenring kann aus einem homogenen Stück hergestellt werden oder aus miteinander verklebten und/oder verbolzten Stücken zusammengesetzt werden.
- Bei kleineren Generatoren kann auch der lange Innenring durch zwei kleinere, nicht miteinander verbundene Ringe ersetzt werden.

An der in Fig. 1 dargestellten Grundvariante sind zwischen Innen- und Aussenwicklungsstäben 5 und 7 die Zuganker 29 vorgesehen, die mittels Spannmuttern, einerseits am Aussenring 25, anderseits am Innenring 9 verspannt sind. Die Spannmuttern können dabei vorteilhafterweise im Innen- und/oder Aussenring versenkt werden.

Bezüglich einer senkrechten, auf die koaxialen und im wesentlichen parallel einander gegenüberliegenden Flächen, einerseits des Innenringes 9 und anderseits aufgespannt durch die Innenstäbe 7, sind bevorzugterweise die Zuganker 29 gegen den Statorkörper 1 hin, wie mit α dargestellt, abgekippt, so dass die Zuganker 29 eine verkeilende Zugwirkung auf den Innenring 9 ausüben. Bei gewissen Ausführungsvarianten wird der Winkel α so gewählt, dass auch die Achse der Zuganker 29 bezüglich der koaxialen, einander gegenüberliegenden Kegelflächen, einerseits aufgespannt durch die Konsolenplatten 15, anderseits die äusseren Wicklungsstäbe 5, aus der Senkrechten weg vom Wicklungskörper 1 abgekippt sind, womit der äussere Ring 25 und die Konsolenplatten 15 keilartig nach aussen gespannt werden. Das axiale Nachinnenspannen des Innenringes 9 ist in Fig. 1 schematisch mit K₉ dargestellt, das Nachaussenspannen der Konsolenplatten 15 mit K₁₅.

Wie dargestellt, übertragen die Konsolenplatten 15, bevorzugterweise über zwei oder mehr Ringe 31, Füll- und/oder Polstermaterial 40, die durch die Zuganker 29 bewirkten Kräfte gleichmässig auf die äusseren Wicklungsstäbe 5, letztere über ein oder mehrere Ringe 33 auf die Innenstäbe 7, welche entlang praktisch ihrer ganzen ausgeknickten Schenkellänge dem Innenring 9 entlangliegen. Zwischen den Konsolenplatten 15, den umlaufenden Ringen 31 und den äusseren Wicklungsstäben 5 sind Polster 35 und Füllstücke 40 vorgesehen, ebenso zwischen Ring 33 und den inneren und äusseren Wicklungsstäben 5 bzw. 7. Eine weitere Polsterung 37 ist zwischen der konischen Aussenfläche des Innenringes 9 und den Innenstäben 7 vorgesehen. Ein gepolsterter Einlageteil 39 ist zwischen den inneren und den äusseren Wicklungsstäben 5 bzw. 7 angeordnet.

Die Konsolenplatten 15, die Zuganker 29 mit den Spannmuttern, bestehen bevorzugterweise aus elektrisch nicht leitendem Material oder, insbesondere letztere, aus isoliertem, elektrisch schlecht leitendem Stahl.

Bei der Ueberholung eines Statorwickelkopfes mit Statorkörper 1 und analog zur Darstellung von Fig. 1 kegelig ausgeknickten Wicklungsstäben, wird der IST-Zustand der Originalwicklung durch eine Modalanalyse bezüglich Resonanzverhalten analysiert. Darnach werden die vorgesehenen Originalvorkehrungen, welche die Stäbe am Statorwickelkopf verankern, ganz oder teilweise entfernt. Gegebenenfalls werden neue oder modifizierte Verbinder 13 am Statorkörper 1 montiert, gegebenenfalls die Konsolenplatten 15 ersetzt oder die bereits ursprünglich vorgesehenen Verbinder und/oder Konsolenplatten wiederverwendet. Davor wurden die Ringe 31, 33 mit der entsprechenden Polsterung versehen. Darnach wird der segmentierte Aussenring 25 über den Konsolenplatten 15 zusammengebaut, die Füllstücke 39 gepolstert, als Zwischenlage zwischen die Aussen- und Innenstäbe 5, 7, und die Stäbe durch Füllmaterial und Verkordelungen weiter abgestützt.

Darnach wird der Innenring 9 mit der Polsterung 37 eingeführt und die Zuganker 29 eingebaut. Alle Polster inklusive oder exklusive Polsterung 37 werden darnach mit einem härtenden Harz getränkt und ausgehärtet, daraufhin der Wickelkopf gespannt, mittels der Zuganker 29 und der azimutalen Spannschrauben 28 am Aussenring 25. Abschliessend werden der Aussenring 25 und der Innenring 9 mittels nicht dargestellter Kordeln oder Füllstücken gegenüber der Wicklung gesichert, und es wird mittels einer Kontroll-Modalanalyse das Resonanzverhalten des Stators überprüft, allenfalls durch Um- oder Nachspannen verändert.

Aufgrund der axialen Verspannbarkeit des Innenringes durch die Zuganker 29 und insbesondere auch der innen und aussen grossflächig wirkenden Innen- bzw. Aussenringanordnungen ergibt sich trotz der leichten Zerlegbarkeit des vorgestellten Statorwickelkopfes eine ausserordentlich steife Konstruktion mit Resonanzfrequenzen, die wesentlich über den im Betrieb auftretenden möglichen Anregungsfrequenzen liegen.

In Fig. 1 ist eine bevorzugte Ausführungsvariante der Verbinder 13 dargestellt. Eine Schnittdarstellung zeigt Fig. 3. Der Winkel 13 weist einen oberen querstehenden und im Einbau azimutal liegenden Verankerungsbalken 41 auf, welcher mit dem Statorkörper 1 verschraubt wird und der axial blattfederartig als Biegebalken wirkt. Eine aus Fig. 1 ersichtliche T-förmig angeordnete Verbinderplatte 43 verbindet den Querbalken 41 mit einer unteren, im wesentlichen U-förmig ausgebildeten Verankerungsplatte 45, welche gemäss Fig. 1 mit den Konsolenplatten 15 verschraubt wird. Die Platte 43 kann mit einer Ausnehmung 47 versehen sein.

In einer weiteren Ausführungsvariante können auch bestehende Abstützwinkel als Verbinder 13 vorgesehen sein, welche über Druckfedern mit dem Statorkörper 1 verbunden sind, so dass, zusätzlich oder allein, durch Wirkung der Druckfedern die erforderliche Axialbeweglichkeit zwischen der verspannten Wicklungsstabanordnung und dem Statorkörper 1 ermöglicht wird.

Eine einfache Möglichkeit, eine thermisch bedingte Ausdehnung der Wicklungsstäbe relativ zum Statorkörper 1 axial aufzunehmen, besteht darin, die Schrauben 19 (Fig. 1) in den zugehörigen Bohrungen 20 im Verbinder und/oder in den Konsolenplatten 15 in gummielastischen Büchsen zu lagern, die, federnd, die erwähnten Axialverschiebungen aufnehmen, dabei die Konsolenplatten 15 azimutal in den U-förmigen Platten 45, als Längsführungen, azimutal starr zu führen.

Die Konsolenplatten 15 können auch in den U-förmigen Platten 45, als Führungen wirkend, frei gleitend gelagert sein; die Schrauben 19 fallen dann weg. Dann werden die Platten 15 vorzugsweise mit zur Achse A parallelen Aussenflächen 23 ausgebildet. D.h. dass dann die untere, gleitende Fläche der Platte 45 der Winkel 13 parallel ist zur Achse A. Dazu müssen aber beide, die Winkel 13 sowie die Konsolenplatten 15, ersetzt werden. Die neuen Winkel, nun mit den erwähnten, parallelen Flächen 23, werden wie die ersetzten am Kern 1 montiert. Die neuen Winkel 13 können aus nicht-magnetischem Material, insbesondere aus rostfreiem Stahl oder aus einem Glasfasermaterial oder einer Kombination davon gefertigt sein.

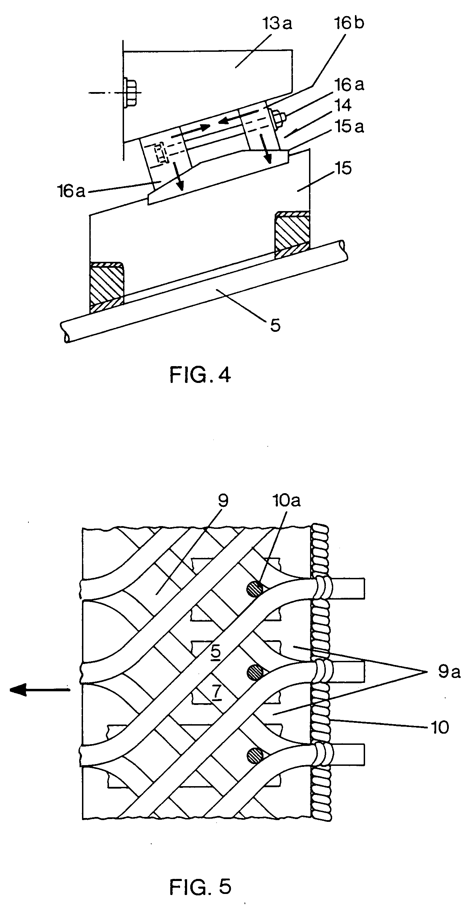

In Fig. 4 ist ein Ausschnitt eines erfindungsgemässen Wickelkopfes in einer weiteren Ausführungsvariante dargestellt, nämlich ohne Aussenring und ohne Zuganker. Bei dieser Ausführungsvariante ist ein modifizierter Winkel 13a über Schrauben mit dem hier nicht dargestellten Statorkörper 1 verbunden. Jedem Winkel 13a ist eine Konsolenplatte 15 zugeordnet mit einem daran beweglichen Uebertrager 15a. Im Winkel 13a ist eine Spannvorrichtung 14 vorgesehen, die als Federsystem oder, wie dargestellt, als Keilsystem die Konsolenplatte 15 gegen den Wicklungsstab 5 spannt. Die dargestellte Spannvorrichtung nimmt, ohne an Wirkung zu verlieren, axiale Stator-Ausdehnungsänderungen auf.

Beim dargestellten Ausführungsbeispiel werden zwei Keile 16a, 16b mittels Spannschraube 16a gegensinnig getrieben und spannen die Konsolenplatte 15 radial nach innen.

In Fig. 5 ist durch die Darstellung eines Wickelkopf-Abwicklungsabschnittes dargestellt, wie der Innenring 9 in angegebener Richtung axial gespannt und fixiert werden kann, ohne Verbindungen zu einer äusseren Abstützanordnung, wie sie durch Aussenringe oder Spannbalken gebildet wird. Der Innenring 9 wird dabei durch die Verkordelung 10 axial nach innen gespannt gehalten, welche starr an den Stäben 5, 7 angebracht wird, und/oder es werden in Gleitschienen 9a sich an den Wicklungsstäben verkrallende Sicherungsstifte 10a eingelegt. Nachdem der Innenring 9 in angegebener Richtung in den Wickelkopf eingepresst worden ist, wird gegebenenfalls der Innenring 9 mit den Gleitschienen 9a verklebt.

Bevorzugterweise lassen sich die beiden Ausführungsvarianten nach Fig. 4 und 5 kombinieren.

Beim axialen Einspannen des Innenringes 9 können anstelle der Vorkehrungen nach Fig. 5 auch axial auf den Innenring einwirkende Keil- und/oder Federanordnungen vorgesehen werden.

## Patentansprüche

1. Statorwickelkopf einer elektrischen Maschine mit einer koaxial zur Maschinenachse endständig sich hohlkegelförmig aufweitenden Wicklungsstabanordnung (5,7) sowie einer Abstützung hierfür, welche einen Innenring (9) umfasst, der sich konusförmig entlang eines wesentlichen axialen Abschnittes der kegelförmigen Stabanordnung (5,7) erstreckt und axial in die hohlkegelförmig sich aufweitende Wicklungsstabanordnung (5,7) verspannt ist und eine damit verbundene Aussenabstützung (15,25), wobei die Abstützung mittels mit Federelementen versehenen Befestigungselementen, welche eine axiale Verschiebung der Abstützung erlauben, mit dem Statorkörper (1) verbunden sind, dadurch gekennzeichnet, dass die Abstützung über an der Aussenabstützung (15,25) angeordnete, federnde Befestigungselemente mit dem Statorkörper (1) verbunden ist,
- die Aussenabstützung (15,25) mittels Zugankern (29) über die Stabanordnung (5,7) mit dem Innenring (9) verspannt ist,
- die Aussenabstützung (25) im Bereich der kegelförmig konvergierenden Stabanordnungsaussenfläche vorgesehen ist,
- die Aussenabstützung (25) aximutal und/oder radial spannbar ist, derart, dass sie über die kegelförmige Stabanordnung (5) aufbringbar ist.

2. Statorwickelkopf nach Anspruch 1, dadurch gekennzeichnet, dass die Aussenabstützung (15,25) mindestens einen segmentierten Ring (25) umfasst oder im wesentlichen azimutal verlaufende Abstützbalken (15).

3. Statorwickelkopf nach Anspruch 2, dadurch gekennzeichnet, dass der segmentierte Ring (25) oder die Balken (15) radial gespannt ist bzw. sind.

4. Statorwickelkopf nach Anspruch 2, dadurch gekennzeichnet, dass der segmentierte Ring (25) azimutal verpannt ist.

5. Statorwickelkopf nach einem der Ansprüche 1 bis 4, dadurch gekennzeichnet, dass der Innenring (9) mittels zu seiner Konusfläche (12) schiefwinklig (α) axial nach innen geneigter Zuganker (29) keilartig (K₉) auf die Stabanordnung zur Wirkung kommt und axial verspannt ist.

6. Statorwickelkopf nach einem der Ansprüche 1 bis 5, dadurch gekennzeichnet, dass die Aussenabstützung über eine konische Spannflächenanordnung (21) auf die Aussenseite der kegelförmigen Stabanordnung (5,7) wirkt und mittels zu dieser Fläche axial schiefwinklig nach aussen geneigter Zuganker (29) keilartig (K₁₅) auf die Stabanordnung (5,7) zur Wirkung kommt.

7. Statorwickelkopf nach einem der Ansprüche 1 bis 6, dadurch gekennzeichnet, dass der Innenring (9) im wesentlichen ausschliesslich mittels Zugankern (29) gehaltert und verspannt ist, abgesehen von einer axialen Sicherung bezüglich der Wicklung.

8. Statorwickelkopf nach einem der Ansprüche 1 bis 7, dadurch gekennzeichnet, dass die Aussenabstützung min-destens einen im wesentlichen ausschliesslich mittels Zugankern (29) gehalterten, spannbaren Aussenring (25) umfasst.

9. Statorwickelkopf nach einem der Ansprüche 1 bis 8, dadurch gekennzeichnet, dass die Aussenabstützung mindestens einen Aussenring (25) mit zwei, vorzugsweise drei und mehr azimutal und/oder radial verspannbaren, lösbaren Ringsegmenten (25a,b,..) umfasst.

10. Statorwickelkopf nach einem der Ansprüche 1 bis 9, dadurch gekennzeichnet, dass sich die Aussenabstützung über eine Abstützanordnung (15), die eine hohlkegelförmige Auflage, im wesentlichen von der Axialausdehnung der kegelförmigen Stabanordnung entsprechender Axialausdehnung festlegt, vorzugsweise dabei über mindestens einen Ring (31), an der Aussenfläche der Stabanordnung (5,7) abstützt.

11. Statorwickelkopf nach einem der Ansprüche 1 bis 10, dadurch gekennzeichnet, dass Stäbe (5,7) der Stabanordnung, Innenring (9) und die Aussenabstützung mindestens teilweise gegenseitig vergossen und/oder gepolstert und/oder verkordelt und miteinander verspannt sind.

12. Statorwickelkopf nach einem der Ansprüche 1 bis 11, dadurch gekennzeichnet, dass die endständige Innenpartie des Innenringes als Kühlgas-Leitanordnung geformt ist, um eine mittels einer koaxialen Verntilatoranordnung erwirkte Gasströmung zu führen.

13. Statorwickelkopf nach einem der Ansprüche 1 bis 12, dadurch gekennzeichnet, dass zwischen Aussenabstützung und Stabanordnung axial vespannbare Keilelemente (16a,16b) vorgesehen sind, vorzugsweise gegenseitig wirkend, und dabei sowohl der Aussenring (25) wie auch die Zuganker (29) weggelassen werden.

14. Statorwickelkopf nach einem der Ansprüche 1 bis 13, dadurch gekennzeichnet, dass eine Aussenabstützung mit axialer Gleitlagerung (15,45) vorgesehen ist.

15. Verwendung mindestens eines Innenringes (9) und einer Aussenabstutzung nach einem der Ansprüche 1 bis 14 als Revisionssatz für eine Statorwickelkopfabstützung.

16. Verfahren zur Umrüstung eines Statorwickelkopfes einer elektrischen Maschine mit einer koaxial zur Maschinenachse enständig sich nach aussen hohlkegelförmig aufweitenden Wicklungsstabanordnung (5,7) sowie mit einer Abstützung hierfür, welche bezüglich der kegelförmigen Wicklungsstabanordnung innen- und aussenliegende Abstützorgane umfasst, dadurch gekennzeichnet, dass
- mindestens Teile der ursprünglich vorgesehenen Abstützung entfernt werden,
- als äusseres Abstützorgan eine Aussenabstützung (15,25), welche azimutal und/oder radial derart spannbar ist, dass sie über die kegelförmige Stabanordnung (5) aufbringbar ist, im Bereich der kegelförmig konvergierenden Stabanordnungsaussenfläche axial federnd am Statorkörper (1) befestigt wird und ein Innenring (9) über die Stabanordnung (5,7) mittels Zugankers (29) mit der Aussenabstützung (15,25) verspannt wird.

17. Verfahren nach Anspruch 16, dadurch gekennzeichnet, dass am Statorkörper (1) federnde Verbinder für die Aussenabstützung (15,25) montiert werden, welch letztere, sei dies im Rahmen ihrer Materialelastizität oder im Rahmen der Federeigenschaften von Federlementen gegebenenfalls zusätzlich gleitend, eine axiale Verschiebbarkeit zwischen Statorkörper (1) und Aussenabstützung (15,25) zulassen.

18. Verfahren nach Anspruch 16 und 17, dadurch gekennzeichnet, dass eine Aussenabstützung (15,25) vorgesehen ist, die gepolstert (35,40) an der Stabanordnung (5) montiert wird.

19. Verfahren nach Anspruch 16 bis 18, dadurch gekennzeichnet, dass, bei vorgesehenen Wicklungsober- (7) und -unterstäben (5), deren Zwischenraum mindestens teilweise ausgepolstert (35,37,39,40) wird.

20. Verfahren nach Anspruch 16 bis 19, dadurch gekennzeichnet, dass die Stäbe (5,7) durch Füllmaterial (37,39,40) und/oder Kordeln zusätzlich abgestützt werden.

21. Verfahren nach Anspruch 16 bis 20, dadurch gekennzeichnet, dass am Statorwickelkopf Polster und/oder Füllmaterial eingebaut werden und, vor Verspannen mindestens des Innenringes, mit Harz getränkt werden.

22. Verfahren nach Anspruch 16 bis 21, dadurch gekennzeichnet, dass eine mittels Kordeln gesicherte Aussenabstützung, vorzugsweise in Form einer Aussenringanordnung, vorgesehen ist.

23. Verfahren nach Anspruch 16 bis 22, dadurch gekennzeichnet, dass, vor Umrüsten und vorzugsweise auch darnach, der Zustand des Statorwickelkopfes mittels einer Modalanalyse auf sein Resonanzverhalten hin geprüft wird und gegebenenfalls das Resonanzverhalten durch Nachspannen oder Umspannen korrigiert wird.

## Claims

1. Stator end winding of an electrical machine with a winding bar device (5,7) widened to the end in the shape of a hollow cone and coaxially to the machine axis, as well as a support therefore, which includes an inside ring (9) which is extending conically along an essentially axial section of the conical bar device (5,7) and is braced axially in the winding bar device (5,7) widening in the shape of a hollow cone and an outside support (15, 25) connected therewith, whereby the support is connected to the stator body (1) by means of fastening elements including elastic elements which render possible an axial shift of the support, characterized by the fact that the support is connected to the stator body (1) by elastic fastening elements located on the outside support (15,25),
- that the outside support (15,25) is assembled to the inside ring (9) by means of tie rods (29) over the bar device (5, 7),
- that the outside suppport (25) is foreseen in the area of the outside surface of the conically converging bar device,
- that the outside support (25) can be tightened in azimutal and/or radial direction in such a way that it can be seated over the conical bar device (5).

2. Stator end winding according to claim 1, characterized by the fact that the outside support (15, 25) includes at least a segmented ring (25) or support rods (25) extending essentially in azimutal direction.

3. Stator end winding according to claim 2, characterized by the fact that the segmented ring (25) or the rods (15) is or are tightened in radial direction.

4. Stator end winding according to claim 2, characterized by the fact that the segmented ring (25) is tightened in azimutal direction.

5. Stator end winding according to one of the claims 1 to 4, characterized by the fact that the inside ring (9) is acting wedgewise (Kg) on the bar device and is axially tightened by means of tie rods (29) inclined axially to the inside with an angle (α) to its cone surface (12).

6. Stator end winding according to one of the claims 1 to 5, characterized by the fact that the outside support is acting on the outside face of the conical bar device (5, 7) through a conical tightening surface device (21) and is acting wedgewise (K₁₅) on the bar device (5, 7) by means of tie rods (29) inclined axially to the outside with an angle to this surface.

7. Stator end winding according to one of the claims 1 to 6, characterized by the fact that the inside ring (9) is fastened and tightened essentially exclusively by means of tie rods (29) excepted an axial securing to the winding.

8. Stator end winding according to one of the claims 1 to 7, characterized by the fact that the outside support includes at least one outside ring (25) which can be tightened and is fastened essentially exclusively by means of tie rods (29).

9. Stator end winding according to one of the claims 1 to 8, characterized by the fact that the outside support includes at least one outside ring (25) with two and, preferably, three or several ring segments (25a, b,..) which can be loosened and tightened in azimutal and/or radial direction.

10. Stator end winding according to one of the claims 1 to 9, characterized by the fact that the outside support stays on the outside surface of the bar device (5, 7) through a support device (25) having the shape of a hollow cone and extending essentially in axial direction in accordance with the axial extension of the conical bar device and, preferably through at least one ring (31).

11. Stator end winding according to one of the claims 1 to 10, characterized by the fact that bars (5, 7) of the bar device, the inside ring (9) and the outside support are at least partially sealed together and/or fastened by upholstering and/or strings and tightened together.

12. Stator end winding according to one of the claims 1 to 12, characterized by the fact that the end inside part of the inside ring has the shape of a cooling gas guiding device for guiding the gas stream created by a coaxial fan device.

13. Stator end winding according to one of the claims 1 to 12, characterized by the fact, that between the outside support and the bar device, edge elements (16a, 16b) are foreseen, which can be axially tightened and are acting preferably in opposite directions whereby the outside ring (25) as well as the tie rods (29) are no longer necessary.

14. Stator end winding according to one of the claims 1 to 13, characterized by the fact that an outside support is foreseen with axial sliding support (15, 45).

15. Use of at least one inside ring (9) and one outside support according to claims 1 to 14 as spare set for a stator end winding support.

16. Method for the conversion of a stator end winding of an electrical machine with a winding bar device (5, 7) extending at the end to the outside in the shape of a hollow cone and coaxially to the machine axis, as well as a support therefore which includes support elements located on the inside and the outside of the conical winding bar device, characterized by the fact
- that at least parts of the initially foreseen support are removed,
- that, as outside support element, an outside support (15, 25) is foreseen which can be tightened in azimutal and/or radial direction in such a way that it can stay over the conical bar device (5) and is fastened in the area of the outside surface of the conically converging bar device to the stator body (1) with axial elasticity and an inside ring (9) is connected to the outside support (15, 25) by means of tie rods (29) over the bar device (5, 7).

17. Method according to claim 16, characterized by the fact that elastic connection elements for the outside support (15, 25) are mounted on the stator body (1), whereby these elements make possible, either as as consequence of the elasticity of their material or as a consequence of the elastic properties of spring elements, an additional sliding movement between the stator body (1) and the outside support (15, 25).

18. Method according to claim 16 and 17, characterized bythe fact that an outside support (15, 25) is foreseen, which is mounted with upholstering (35, 40) on the bar device (5).

19. Method according to claim 16 to 18, characterized by the fact that, in the top bars (7) and the bottom bars (5) of the winding, the gaps between these bars are filled at least partially by an upholstering (35, 37, 39, 40).

20. Method according to claim 16 to 19, characterized by the fact that the bars (5, 7) are additionally suppported by a filling material (37, 39, 40) and/or by strings.

21. Method according to claim 16 to 20, characterized by the fact that upholstering and/or filling material is included in the stator end winding and is impregnated with a resin before the tightening of at least the inside ring.

22. Method according to claim 16 to 21, characterized by the fact that a outside support fastened by means of strings is foreseen, preferably as an outside ring device.

23. Method according to claim 16 to 22, characterized by the fact that, before the conversion and preferably also afterwards, the condition of the stator end winding is checked by modal analysis to ascertain its resonance behaviour and its resonance behaviour is possibly improved by additional or modified tightening.

## Revendications

1. Tête d'enroulement statorique d'une machine électrique avec un dispositif de barreaux d'enroulement (5, 7) s'élargissant a l'extrémité en forme de cône creux coaxialement par rapport à l'axe de la machine, ainsi qu'un support pour celui-ci qui comprend un anneau intérieur (9) qui s'étend en forme de cône le long d'une section essentiellement axiale du dispositif de barreaux coniques (5,7) et qui est serré axialement dans le dispositif de barreaux d'enroulement (5, 7) s'élargissant en forme de cône creux, et un support extérieur (15, 25) assemblé à celui-ci, le support étant assemblé au corps de stator 1 au moyen d'éléments de fixation pourvus d'éléments élastiques qui permettent un déplacement axial du support, caractérisé en ce que le support est assemblé au corps de stator (1) par des éléments de fixation élastiques disposés sur le support extérieur (15, 25),
- que le support extérieur (15, 25) est assemblé à l'anneau intérieur (9) au moyen de tirants (29) sur le dispositif de barreaux (5, 7),
- que le support extérieur (25) est prévu dans la région de la surface extérieure du dispositif des barreaux convergeant en forme de cône,
- et que le support extérieur (25) peut être serré dans le sens azimutal et/ou radial, de façon a pouvoir être appliqué sur le dispositif de barreaux coniques (5).

2. Tête d'enroulement statorique selon la revendication 1, caractérisée en ce que le support extérieur (15, 25) comprend au moins un anneau segmenté (25) ou des barres de support (15) disposées essentiellement en direction azimutale.

3. Tête d'enroulement statorique selon la revendication 2, caractérisée en ce que l'anneau segmenté (25) ou les barres (15) est(sont) serré(e)s en direction radiale.

4. Tête d'enroulement statorique selon la revendication 2, caractérisée en ce que l'anneau segmenté (25) est serré en direction azimutale.

5. Tête d'enroulement statorique selon l'une des revendications 1 a 4, caractérisée en ce que l'anneau intérieur (9) vient agir sur le dispositif de barreaux avec un effet de coin (K₉) et est serré axialement au moyen de tirants (29) inclinés obliquement d'un angle (α) axialement vers l'intérieur par rapport sa surface conique (12).

6. Tête d'enroulement statorique selon l'une des revendications 1 à 5, caractérisée en ce que le support extérieur agit par un dispositif à surface de serrage conique (21) sur la face extérieure du dispositif de barreaux d'enroulement coniques (5, 7) et agit sur le dispositif de barreaux (5, 7) avec un effet de coin (K₁₅) au moyen de tirants (29) inclinés obliquement vers l'extérieur dans le sens axial vers cette surface.

7. Tête d'enroulement statorique selon l'une des revendications 1 à 6, caractérisée en ce que l'anneau intérieur (9) est fixé et serré de manière essentiellement exclusive au moyen de tirants (29) , compte non tenu d'une fixation axiale par rapport à l'enroulement.

8. Tête d'enroulement statorique selon l'une des revendications 1 à 7, caractérisée en ce que le support extérieur comprend au moins un anneau extérieur (25) pouvant être serré et maintenu de manière essentiellement exclusive au moyen de tirants (29).

9. Tête d'enroulement statorique selon l'une des revendications 1 a 8, caractérisée en ce que le support extérieur comprend au moins un anneau extérieur (25) avec deux et, de préférence, trois ou plusieurs segments d'anneaux (25a, b ,..) détachables et serrables en direction azimultale et/ou radiale.

10. Tête d'enroulement statorique selon l'une des revendications 1 a 9, caractérisée en ce que le support extérieur prend appui sur la surface extérieure du dispositif des barreaux (5, 7) par un dispositif de support (15) qui a une extension axiale correspondant essentiellement à l'extension axiale des dispositifs de barreaux coniques, de préférence, par au moins un anneau (31).

11. Tête d'enroulement statorique selon l'une des revendications 1 à 10, caractérisée en ce que les barreaux (5, 7) du dispositif de barreaux, l'anneau intérieur (9) et le support extérieur sont scellés, au moins partiellement, l'un contre l'autre et/ou sont rembourrés et/ou ligaturés et serrés les uns aux autres.

12. Tête d'enroulement statorique selon l'une des revendications 1 a 11, caractérisée en ce que la partie intérieure d'extrémité de l'anneau intérieur a la forme d'un dispositif de guidage du gaz de refroidissement, afin de guider le courant de gaz produit par un dispositif à ventilateur coaxial.

13. Tête d'enroulement statorique selon l'une des revendications 1 a 12, caractérisée en ce qu'il est prévu, entre le support extérieur et le dispositif des barreaux, des éléments de coin (16a, 16b) pouvant être serrés en direction axiale et agissant, de préférence, en sens opposé et que, dans ce cas, l'anneau extérieur (25) ainsi que les tirants (29) peuvent être supprimés.

14. Tête d'enroulement statorique selon l'une des revendications 1 à 13, caractérisée en ce qu'il est prévu un support extérieur avec support glissant en direction axiale (15, 45).

15. Utilisation d'au moins un anneau intérieur (9) et d'un support extérieur selon l'une des revendications 1 a 14 comme ensemble de remplacement pour un support de tête d'enroulement statorique.

16. Procédé pour transformer une tête d'enroulement statorique d'une machine électrique avec un dispositif de barreaux d'enroulement (5, 7) s'étendant coaxialement par rapport a l'axe de la machine en s'élargissant à l'extrémité vers l'extérieur en forme de cône creux, ainsi qu'avec un dispositif pour celui-ci qui comprend des organes de support disposés intérieurement et extérieurement par rapport au dispositif conique a barreaux d'enroulement, caractérisé en ce que
- au moins des parties du support prévu initialement sont enlevées,
- l'on utilise comme organe de support extérieur un support extérieur (15, 25) qui peut être serré en direction azimutale et/ou radiale, de façon à pouvoir être monté sur le dispositif conique à (5) conique qui est fixé au corps de stator (1) de manière élastique dans le sens axial dans la région de la surface extérieure du dispositif de barreaux convergeant en forme de cône, et un anneau intérieur (9) est assemblé au support extérieur (15, 25) au moyen de tirants (29) sur le dispositif de barreaux (5, 7).

17. Procédé selon la revendication 15, caractérisé en ce que des dispositifs d'assemblage élastiques sont montés sur le corps de stator (1) pour le support extérieur (15, 25) ce dernier permettant, soit dans le cadre de l'élasticité de son matériau, soit dans le cadre des caractéristiques élastiques d'éléments de ressort, une possibiité de déplacement axial avec glissement éventuellement supplémentaire entre le corps de stator (1) et le support extérieur (15, 25).

18. Procédé selon les revendications 16 et 17, caractérisé en ce qu'il est prévu un support extérieur (15, 25) qui est monté avec un rembourrage (35, 40) sur le dispositif à barreaux (5).

19. Procédé selon les revendications 16 à 18, caractérisé en ce qu'il est prévu des barreaux supérieurs (7) et inférieurs (5) d'enroulement dont les interstices sont remplis, au moins partiellement, de rembourrage (35, 37, 39, 40).

20. Procédé selon les revendications 16 à 19, caractérisé en ce que les barreaux (5, 7) sont supportés en outre par un matériau de remplissage (36, 39, 40) et/ou par des ligatures.

21. Procédé selon les revendications 16 à 20, caractérisé en ce qu'un rembourrage et/ou un matériau de remplissage est placé sur la tête d'enroulement statorique et est imprégné de résine avant le serrage d'au moins l'anneau intérieur.

22. Procédé selon les revendications 16 à 21, caractérisé en ce qu'il est prévu un support extérieur fixé au moyen de ligatures, de préférence, sous la forme d'un dispositif d'anneau extérieur.

23. Procédé selon les revendications 16 a 22, caractérisé en ce que, avant la transformation et, de préférence aussi, après celle-ci, l'état de la tête d'enroulement statorique est vérifié par une analyse modale pour déterminer son comportement en résonance, et que le comportement en résonance est corrigé éventuellement en modifiant ou en augmentant le serrage.
